# EUROPEAN PATENT APPLICATION

(11) **EP 2 762 455 A1**
(43) Date of publication of application: **06.08.2014**
(21) Application number: 13468002.4
(22) Date of filing: 31.01.2013
(51) Int. Cl.: C02F 3/32, B09B 3/00, B09C 1/10

(54) **Waste treatment process by mineralization and execution of remediation in degraded areas and landscape works by producing and use of industrial composites and artificial soils from processed mineralized waste and scrap**

(71) Applicant: Vekton d.o.o., 3000 Celje (SI)
(72) Inventor: Bednjicki, Ivan, 3000 Celje (SI); Sprinzer, Mirko, 2201 Zg. Kungota (SI)

(57) **Abstract**

The invention relates to a waste treatment method by mineralization, in which the construction, mining and industrial waste, waste from communal activities, sludge and sediments from water bodies are primarily processed by recycling, and secondarily by mixing primary processed waste with biological preparation "Ekogen MI 10", produced on basis of enzymes and micro-organisms, which are obtained by extraction from brown seaweed from Norwegian kelp - mineralization, wherein the process of fermentation is accelerted, and results in complete decomposition of any organic biodegradable substances, decomposition of oils and fats, and by ion exchange converting heavy metals, nitrates, nitrites and other harmful contaminants and compounds in unleachable forms.

## Description

The subject of this invention is a technical innovation - the treatment process of waste by mineralization and execution of large-scale remediation and earthworks in the degraded mining areas and other environmentally damaged areas of land, construction of buildings and other landscape construction and land development.

Management of construction, mining and industrial waste, waste from communal activities, sediments and sludge from water bodies represents environmentally and financially a big problem for the polluters, which are according to polluter pays principle responsible for the proper and mandatory handling; also the same is true for execution of rehabilitation of degraded areas and environmentally damaged areas of land, for which polluters are equally responsible.

The tightening of control requirements for waste management in mentioned areas and their annual quantifiably large generation taking into account very limited possibilities of their disposal as ways of waste disposal requires finding appropriate new alternative technical solutions that will not result in need for constructing municipal and industrial waste landfills, but will provide usable technical options and solutions for beneficial re-use of treated waste in executing major earthworks in municipalities, regions and countries.

This presented invention provides, on the one hand, a new technical possibility of waste and residues treatment (which represent by volume the majority of waste) by mineralization procedure without the need for landfill construction or finding other ways of their disposal, and on the other hand, presents a technical solution by using industrial composites and artificial soils and enables spatial, technical and environmentally acceptable and allowed remedial earthworks for rehabilitation of degraded mining areas and other environmentally damaged areas of land, general construction of buildings, as well as in execution of other landscape works and developments.

Previously known solutions in the field of construction, mining and industrial waste, and waste from communal activities, sediments and sludge from water bodies was based on an approach that these kinds of waste should be largely managed in the location of its generation, as elsewhere there was not any space for them, no relevant appropriate technical solutions for dealing with them and the needs for their beneficial re-use were not known.

In the procedures of earlier mentioned practices the waste was not properly treated, and their resulting amount significantly exceeds the potential for handling in the sites of their generation, thus the waste is often improperly discarded in the countryside or in other inappropriate areas, where they soon become a burden and expense for the owners of the land (often this is a local community or country).

Featured invention is based on technically new processing of waste and residues with the mineralization process into industrial composites and artificial soils, and further procedure of their useful re-use as building products, fillers in building or treated waste, which can be introduced into the soil for organic improvement of land by executing large-scale remediation and earthworks in the degraded mining areas and other environmentally damaged areas of land, construction of buildings and other landscape construction and land development.

According to the presented invention the construction, mining and industrial waste, waste from communal activities, sludge and sediments from water bodies are gathered in places of their formation, and are then primarily treated by known techniques of waste treatment in accordance with the Directive on Waste No. 2008/98-ES primarily by procedure R5 for recycling (reclamation of other inorganic materials) or by procedure R12 for exchange of wastes for treatment by classifying, separating and dehydration. With this described primary processing is necessary to achieve that the fraction size of processed waste is less than 50 mm and the dry matter content in it is greater than 25%.

Primarily processed waste as described in preceding paragraph is in the next stage secondarily processed according to the procedure R12 to exchange waste for processing by mixing the waste with biological preparation based on enzymes and microorganisms "Ekogen MI 10", the producer is Ekogen from Levec in Celje, which activates the process of mineralization of processed waste, resulting in acceleration of the fermentation process and complete decomposition of biodegradable organic substances, oils and fats, and by forming ion exchange so that heavy metals, nitrates, nitrites and other harmful contaminants and compounds in unleacheable forms are transformed.

The secondary process according to the procedure R12 to exchange waste for processing by mixing the waste with biological preparation "Ekogen MI 10" goes in a manner that these highly concentrated biological preparation is first mixed with water in a ratio of 1:200, and then the resulting solution is sprayed on the conveyor belt and enters the primarily processed waste in the dosing ratio of 30 to 80 liters of solution/1 m3 of primary processed waste. After the secondary treatment phase of mineralization, which can be carried out under temperature conditions ranging from +5 to +30 degrees Celsius, the processed waste is suspended on an temporary operational landfill for a period of 7 days before further handling.

Highly concentrated biological preparation "Ekogen MI 10" is made on the basis of enzymes and micro-organisms by a special procedure of extracting brown seaweed from Norwegian kelp. After contact of concentrated preparation with mixing water the enzymes are activated that prepare organic material for the process of metabolism, which is carried out by microorganisms. In the metabolic process the microorganisms process the organic matter into mineral substance.

In the following procedure, depending on the technical characteristics of the treated waste, these newly produced industrial composites or artificial soils are used for executing large-scale remediation and earthworks in the mining degraded areas and other environmentally damaged areas of land, construction of buildings and other landscape construction and spatial planning. According to the Directive on Waste No. 2008/98-ES the re-use of processed industrial composites or artificial earths with mineralization by the procedure described is made in places of their installation under the R10 process by entering in or on the ground in benefit to agriculture or ecological improvement of soil, but if the recovered waste as a construction materials meets the provisions of the Construction Products, pursuant laws and regulations, it may be marketed as construction products.

The scope of use for so processed industrial composites and artificial soils from processed mineralized waste and scrap is procedurally moving outside the range of waste formation, that is subject of processing, thereby significantly reducing the current pressure of waste management in these areas, which is the basic production as such and also intended for the latter activities. New locations or areas of using the waste processed into new industrial composites and artificial soils are usually free space areas in need of remedial works (mostly large-scale mining surfaces, and other areas in need of remediation of land), building sites, which are subject to extensive earthmoving and other areas of landscape works and interventions in places that require the use of large masses of products, materials and soils (e.g. flood embankments, raising land for flood protection, ....).

Possibility of technical use of processed waste by mineralization procedure for executing these large-scale earthworks is in the domain of planners, who are planning such works. New industrial composites are basically usable as volume fills, and artificial soils for use in final remediation layers and coatings.

## Claims

1. Waste treatment by mineralization, in which the construction, mining and industrial waste, waste from communal activities, sludge and sediments from water bodies are primarily processed by recycling, and secondarily by mixing primary processed waste with biological preparation "Ekogen MI 10", produced on basis of enzymes and micro-organisms, which are obtained by extraction from brown seaweed from Norwegian kelp - mineralization, which is **characterized in that** it accelerates the process of fermentation, and results in complete decomposition of any organic biodegradable substances, decomposition of oils and fats, and by ion exchange converting heavy metals, nitrates, nitrites and other harmful contaminants and compounds in unleachable forms.

2. The use of processed waste by mineralization as described in patent claim 1 in executing the rehabilitation of areas and landscape works with the production and use of industrial composites and artificially prepared soils from mineralized waste and scrap from construction, mining and industry waste, communal activities and from remediation and maintenance of water bodies, with new composites used as volume fillers in execution of these type of remediation of areas and in landscape construction; artificially prepared soils are used for the need of executing final remediation layers and coatings according to process of waste treatment by their introduction into or onto land with a view to improving the ecological condition of the soil.
